# EUROPÄISCHE PATENTSCHRIFT

(11) **EP 1 065 134 B1**
(45) Veröffentlichungstag und Bekanntmachung des Hinweises auf die Patenterteilung: **26.03.2003**
(21) Anmeldenummer: 00103205.1
(22) Anmeldetag: 17.02.2000
(51) Int. Cl.: B62D 15/02, G01D 5/347

(54) **Lenkwinkelsensor mit Ausgleichstück**
Steering angle sensor with equalizing part
Capteur de l'angle de braquage avec pièce d'égalisation

(30) Priorität: 29.06.1999 DE 19929905
(43) Veröffentlichungstag der Anmeldung: 03.01.2001
(73) Patentinhaber: Valeo Schalter und Sensoren GmbH, 74321 Bietigheim-Bissingen (DE)
(72) Erfinder: Klein, Rudolf, 74348 Lauffen a. N. (DE); Simonis, Karl, 74366 Kirchheim a. N. (DE); Grüner, Roland, 71732 Tamm (DE)
(74) Vertreter: Dreiss, Fuhlendorf, Steimle & Becker

(56) Entgegenhaltungen:
- DE-A- 19 712 523
- US-A- 5 309 758
- PATENT ABSTRACTS OF JAPAN vol. 010, no. 308 (P-508), 21. Oktober 1986 (1986-10-21) & JP 61 122519 A (MATSUSHITA ELECTRIC IND CO LTD), 10. Juni 1986 (1986-06-10)

## Beschreibung

Die Erfindung geht aus von einem Lenkwinkelsensor mit einer Codescheibe, die mit einer Lenksäule drehfest verbunden ist. Ein derartiger Lenkwinkelsensor ist aus der offenlegungsschrift DE-A-197 12 523 bekannt.

Mit der wachsenden Verbreitung von Regelsystemen zur Regelung der Fahrdynamik von Kraftfahrzeugen hat die Bedeutung von Lenkwinkelsensoren erheblich zugenommen. Derartige Sensoren haben die Aufgabe, ein Signal zu erzeugen, welches kennzeichnend für den Lenkwinkel bzw. die Lenkwinkeländerung eines Fahrzeugs ist. Hierzu ist in der Regel ein Codierelement, insbesondere eine Codierscheibe starr mit der Lenksäule verbunden. Der Codescheibe ist eine Abtastung zugeordnet, welche gegenüber dem Chassis bzw. der Lenksäule fixiert ist und welche in der Lage ist, den Code der Codescheibe zu lesen. Ein mögliches Prinzip zur Abtastung der Codescheibe kann in einer optischen Abtastung bestehen. Dabei sind an der Scheibe etwa in Form von Zähnen Markierungen angebracht, welche durch eine optische Lichtschranke abgetastet werden. Die Abtasteinrichtung kann aus einer Leuchtdiode und einem Lichtempfänger bzw. einer Mehrzahl derartiger Bauelemente bestehen und ist gegenüber dem Gehäuse des Lenkwinkelsensors ortsfest angeordnet.

Da die zu messenden Lenkwinkel sehr genau bestimmt werden sollen, sind die zulässigen Toleranzen hinsichtlich der Codescheibe und der Lichtschranke sehr klein. Um durch die Lichtschranke die Zähne der Codescheibe abtasten zu können, ist bereits vorgeschlagen worden, die Codescheibe selber im Gehäuse des Lenkwinkelsensors drehbar zu lagern. Dabei greift ein mit der Lenksäule gekoppelter Finger in eine Transportlasche der Codescheibe, so dass die Codescheibe der Drehbewegung der Lenksäule folgt. Im Zusammenhang mit der Integration mehrerer an der Lenksäule angeordneter Bauelemente ist eine solche Anordnung beispielsweise in der DE-OS 19 60 19 64 vorgeschlagen worden. Dieser Transportfinger hat im wesentlichen die Aufgabe, ausgehend von anderen direkt von der Lenksäule angetriebenen Einrichtungen auch die axial versetzt befindliche Codescheibe antreiben zu können.

Unabhängig davon besteht auch bei der zuletzt genannten Antriebsart das Problem, dass für die Lage der Lenksäule hinsichtlich ihres radialen Versatzes eine gewisse Toleranz berücksichtigt werden muß. Ist nun das Drehlager der Lenksäule gegenüber der Drehachse der Codescheibe versetzt, so wird auf die Codescheibe eine radiale Kraft ausgeübt, die zur Zerstörung des Lenkwinkelsensors führen kann oder zumindest die Genauigkeit seiner Meßergebnisse stark beeinflußt. Ist dagegen, wie bei vielen Einrichtungen, die Codescheibe direkt mit der Lenksäule gekoppelt, so kann die Codescheibe ihre Lage gegenüber der Abtasteinrichtung bzw. Lichtschranke verschieben, wodurch die gleichen Schwierigkeiten auftreten. Die o.g. Verhältnisse sind nicht auf die Abtastung mit optischen Lichtschranken beschränkt. Sie treten in analoger Form auch bei magnetischer Abtastung oder anderen Abtastformen z.B. bei mechanischer Abtastung einer Codescheibe auf. Es ist dabei auch nicht notwendig, dass wie bei der o.a. Vorveröffentlichung die Codierung auf der Mantelfläche angebracht ist. Die genannten Probleme können ebenso auftreten, wenn die Codierung auf einer Stirnfläche der Codescheibe angebracht ist.

Der Erfindung liegt daher die Aufgabe zugrunde, einen Lenkwinkelsensor bereitzustellen, bei dem die Einwirkung von radialen Kräften auf die Codescheibe und/oder die Abtasteinrichtung verhindert wird. Weiterhin sollen ein radialer Versatz der Längsachse der Lenksäule und der Drehachse der Codescheibe sowie Rundlauffehler der Lenksäule und/oder der Codescheibe ausgeglichen werden. Außerdem soll der sich aus dem radialen Versatz der Längsachse der Lenksäule und der Drehachse der Codescheibe ergebende Winkelfehler des Lenkwinkelsensors eliminiert werden.

Die erfindungsgemäße Aufgabe wird gelöst durch einen Lenkwinkelsensor mit einer Codescheibe, die mittelbar über ein Ausgleichsstück mit einer Lenksäule drehfest verbunden ist, wobei das Ausgleichsstück gegenüber der Lenksäule entlang eines ersten Radius verschiebbar ist, wobei das Ausgleichsstück gegenüber der Codescheibe entlang eines zweiten Radius verschiebbar ist, und wobei der erste Radius und der zweite Radius einen Winkel einschließen.

Bei dem erfindungsgemäßen Lenkwinkesensor wird die Tangentialkraft der Lenksäule nicht direkt, sondern über ein Ausgleichsstück auf die Codescheibe zu übertragen. Das Ausgleichsstück überträgt die Tangentialkräfte der Lenksäule spielfrei auf die Codescheibe. In radialer Richtung hat das Ausgleichsstück jedoch zwei Freiheitsgrade, die es erlauben einen evtl. vorhandenen Versatz der Längsachse der Lenksäule und der Drehachse der Codescheibe sowie Rundlauffehler der Lenksäule und/oder der Codescheibe auszugleichen.

Außerdem wird der sich aus dem radialen Versatz der Längsachse der Lenksäule und der Drehachse der Codescheibe ergebende Winkelfehler verringert.

Bei einer Ausführungsform der Erfindung schließen der erste Radius und der zweite Radius einen Winkel von 90° ein, so dass der sich aus dem radialen Versatz der Längsachse der Lenksäule und der Drehachse der Codescheibe ergebende Winkelfehler vollständig eliminiert wird.

Eine Variante sieht vor, dass an der Codescheibe oder dem Ausgleichsstück mindestens ein in axialer Richtung weisender Vorsprung vorgesehen ist, der in eine sich in Richtung des ersten Radius erstreckende Ausnehmung in dem Ausgleichsstück bzw. der Codescheibe eingreift.

Bei einer anderen Variante ist vorgesehen, dass an der Lenksäule oder dem Ausgleichsstück mindestens ein in axialer Richtung weisender Vorsprung vorgesehen ist, der in eine sich in Richtung des zweiten Radius erstreckende Ausnehmung in dem Ausgleichsstück bzw. der Lenksäule eingreift.

Beiden Varianten gemeinsam ist, dass zumindest ein in axialer Richtung weisender Vorsprung vorgesehen ist, der in eine sich in radialer Richtung erstreckende Ausnehmung eintaucht. Die Seitenwände der Ausnehmung sind dabei in der Lage, von dem Zapfen ausgehende oder auf den Zapfen ausgeübte Kräfte aufzunehmen bzw. auf den Zapfen zu übertragen. Da die Ausnehmung aber in radialer Richtung verläuft, können keine Kräfte in radialer Richtung zwischen Ausnehmung und Vorsprung übertragen werden. Entsprechendes gilt für die axiale Richtung, da der Zapfen sich in dieser Richtung frei bewegen kann. Dies gilt insbesondere dann, wenn die Ausnehmung eine Durchgangsöffnung ist.

In Ergänzung der Erfindung ist vorgesehen, dass die Vorsprünge exzentrisch angeordnete, sich in axialer Richtung erstreckende Zapfen sind, und dass die Ausnehmungen sich in Richtung des ersten Radius oder des zweiten Radius erstreckende Langlöcher sind, so dass die Herstellung einer in tangentialer Richtung spielfreien Kraftübertragung, die keine Radialkräfte überträgt und keine Winkelfehler verursacht, einfach und kostengünstig erfolgt.

In weiterer Ausgestaltung der Erfindung ist das Ausgleichsstück in axialer Richtung geteilt und mit Rastmitteln derart versehen ist, dass die Teile des Ausgleichsstücks an geeigneter Stelle der Lenksäule in radialer Richtung zusammengefügt und miteinander verrastet werden, so dass die Montage sowie spätere Reparaturen vereinfacht werden.

Eine Variante sieht vor, dass die Codescheibe radial gesichert und drehbar in einem Gehäuse des Lenkwinkelsensors gelagert ist, so dass Codescheibe und Lenkwinkelsensor als montagefertige Einheit hergestellt werden können und die relative Lage beider Bauteile zueinander keinen Veränderungen unterworfen ist.

Bei einer anderen Variante ist vorgesehen, dass in dem Gehäuse des Lenkwinkelsensors eine Einrichtung zum Abtasten der Codescheibe angeordnet ist, so dass der Lenkwinkelsensor funktionsfertig montiert und vor dem Einbau in ein Kraftfahrzeug geprüft werden kann.

Außerdem wird, wenn die Codescheibe radial gesichert und drehbar in dem Gehäuse des Lenkwinkelsensors gelagert ist und in dem Gehäuse des Lenkwinkelsensors eine Einrichtung zum Abtasten der Codescheibe angeordnet ist, sichergestellt, dass die Codescheibe ihre Lage zumindest in radialer Richtung gegenüber der Abtasteinrichtung insbesondere also den optischen Elementen nicht ändern und somit kleine Toleranzen zwischen Codescheibe und Abtasteinrichtung ermöglicht werden können. Hierdurch kann die Codescheibe entsprechend klein ausgestaltet werden, so dass sie auch in einem mehrere Baugruppen kombinierenden und an der Lenksäule befestigten Gehäuse untergebracht werden kann.

Bei einer Ausgestaltung der Erfindung ist die Drehwinkelcodierung auf einer Mantelfläche der Codescheibe angeordnet ist, so dass die Abtastvorrichtung im wesentlichen außerhalb der Codescheibe angeordnet werden kann.

In Ergänzung der Erfindung ist die Drehwinkelcodierung auf einer Stirnfläche der Codescheibe angeordnet, so dass der Lenkwinkelsensor besonders kompakt baut.

Eine Variante der Erfindung sieht vor, dass die Drehung der Lenksäule von einem drehfest mit der Lenksäule verbundenen Lenkrad auf das Ausgleichsstück übertragen wird, so dass die Montage erleichtert und kein Verbindungselement zwischen Lenksäule und Lenkwinkelsensor erforderlich ist.

Weitere Vorteile und vorteilhafte Ausgestaltungen der Erfindung sind der Zeichnung, der nachfolgenden Beschreibung und den Ansprüchen entnehmbar.

Ein Ausführungsbeispiel des Gegenstands der Erfindung ist in der Zeichnung dargestellt und im folgenden näher beschrieben. Es zeigen:
- Fig. 1:: Teile eines erfindungsgemäßen Lenkwinkelsensors mit Ausgleichsstück und einem Lenkrad in Explosionsdarstellung;
- Fig. 2:: die Codescheibe eines Lenkwinkelsensors und ein Ausgleichsstück in zusammengebautem Zustand;
- Fig. 3:: Teile eines erfindungsgemäßen Lenkwinkelsensors mit Ausgleichsstück und Lenkrad in zusammengebautem Zustand; und
- Fig. 4:: einen Querschnitt durch einen erfindungsgemäßen Lenkwinkelsensor in zusammengebautem Zustand.

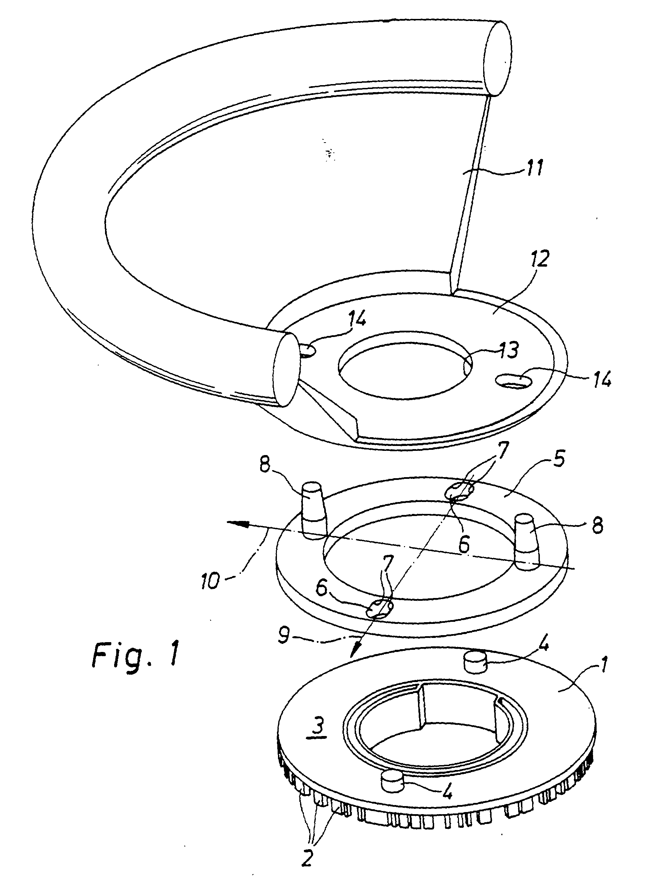

In Fig. 1 ist eine Codescheibe 1 eines Lenkwinkelsensors dargestellt. Die Codescheibe 1 weist an ihrer Mantelfläche Zähne 2 auf. Diese Zähne 2 enthalten Informationen über den Lenkwinkel, die über eine nicht dargestellte Abtasteinrichtung abgelesen werden können. Nicht dargestellt ist die Lagerung der Codescheibe 1 im ebenfalls nicht dargestellten Gehäuse des Lenkwinkelsensors. Auf der oberen Stirnfläche 3 der Codescheibe 1 sind zwei zylindrische Zapfen 4 angeordnet.

Oberhalb der Codescheibe 1 befindet sich ein Ausgleichsstück 5, welches die Form eines Kreisrings hat.

In dem Ausgleichsstück 5 befinden sich Langlöcher 6. Diese Langlöcher 6 sind so angeordnet, dass die Zapfen 4 der Codescheibe 1 in sie eingeführt werden können. Dabei berühren die Zapfen 4 die in radialer Richtung verlaufenden Wände 7 der Langlöcher 6. Dadurch können Kräfte in tangentialer Richtung spielfrei zwischen Ausgleichsstück 5 und Codescheibe 1 übertragen werden. Aufgrund der radialen Erstreckung der Langlöcher 6 kann das Ausgleichsstück 5 entlang einer gedachten Linie, die durch die Mittelpunkte der Zapfen 4 verläuft, in radialer Richtung relativ zu den Zapfen 4 verschoben werden.

Um 90° versetzt zu den Langlöchern 6 befinden sich auf dem Ausgleichsstück 5 zwei Stifte 8. Diese Stifte 8 sind ebenso wie die Langlöcher 6 und die Zapfen 4 um 180° zueinander versetzt angeordnet. Die Stifte 8 sind im oberen Teil konisch, um die Montierbarkeit zu verbessern. Der Winkelversatz von 90° entspricht dem Winkel, welchen ein erster Radius 9 und ein zweiter Radius 10 einschließen.

Oberhalb des Ausgleichsstücks 5 befindet sich ein Lenkrad 11 mit einer Nabe 12. Die Nabe 12 weist eine Mittenbohrung 13 und zwei sich in radialer Richtung erstreckende Langlöcher 14 auf. Diese Langlöcher 14 sind so angeordnet und bemessen, dass die Nabe 12 des Lenkrads 11 auf das Ausgleichsstück 5 geschoben werden kann. In diesem Zustand befinden sich die Stifte 8 in den Langlöchern 14 und sind in tangentialer Richtung ebenfalls spielfrei mit dem Lenkrad 9 verbunden. In radialer Richtung kann das Lenkrad 11 bezüglich des Ausgleichsstücks 5 verschoben werden. Nicht dargestellt ist in dieser Figur die Lenksäule, über welche die Lenkbewegung des Lenkrads 11 auf die gelenkten Räder des Kraftfahrzeugs übertragen wird.

In Fig. 1 ist zu erkennen, dass die Durchmesser der Mittenbohrungen der Codescheibe 1 und des Ausgleichsstücks 5 größer als derjenige Mittenbohrung 13 der Nabe 12 des Lenkrads 11 ist. Dadurch können Codescheibe 1 und Ausgleichsstück 5 radial versetzt zur nicht dargestellten Lenksäule angeordnet sein, ohne dass es zu Vespannungen kommt.

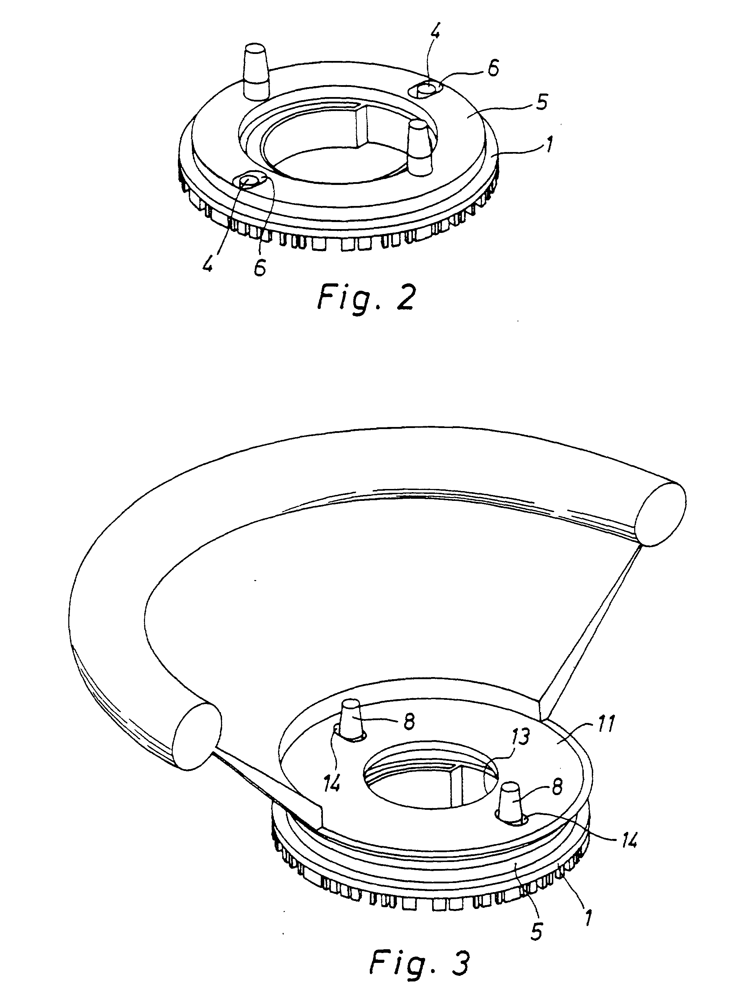

Fig. 2 zeigt die Codescheibe 1 und das Ausgleichsstück 5 in montiertem Zustand. Dabei ist zu erkennen, wie die Zapfen 4 der Codescheibe 1 in den Langlöchern 6 des Ausgleichsstücks 5 radial verschiebbar sind und dennoch in tangentialer Richtung spielfrei die Lenkbewegung übertragen können.

Fig. 3 zeigt die Codescheibe 1, das Ausgleichsstück 5 und das Lenkrad 11 in montiertem Zustand. Die Stifte 8 des Ausgleichsstücks greifen in die Langlöcher 14 der Nabe 12. Ebenfalls zu erkennen ist, wie die Stifte 8 in den Langlöchern 14 der Nabe 5 radial verschiebbar sind und dennoch in tangentialer Richtung spielfrei die Lenkbewegung übertragen können.

Durch den Winkelversatz von 90° zwischen den Langlöchern 6 und den Stiften 8 des Ausgleichsstücks 5 werden Winkelfehler, die sich durch den Versatz der Drehachse der Codescheibe 1 und der nicht dargestellten Lenksäule, auf der das Lenkrad 9 befestigt ist, ergeben, vollständig ausgeglichen. Außerdem kann der erfindungsgemäße Lenkwinkelsensor vor dem Einbau in ein Kraftfahrzeug funktionsfertig montiert und geprüft werden.

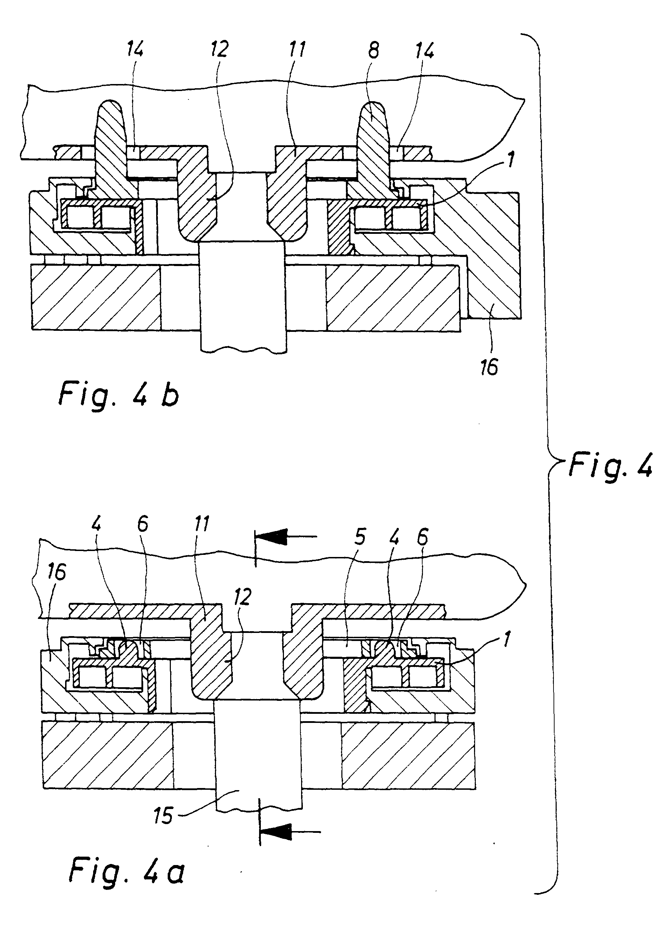

Fig. 4 zeigt zwei um 90° verdrehte Querschnitte durch einen Lenkwinkelsensor. Eine Lenksäule 15 ist mit der Nabe 12 des Lenkrads 11 fest verbunden. Ein Gehäuse 16 umschließt die Codescheibe 1 und fixiert das Ausgleichsstück 5 in axialer Richtung. Es ist auch möglich, das Ausgleichsstück 5 zweiteilig auszuführen, so dass es demontiert werden kann, ohne das Lenkrad 11 entfernen zu müssen. Die Codescheibe 1 ist in dem Gehäuse 16 gelagert. Nicht dargestellt ist die in dem Gehäuse 16 angebrachte Abtasteinrichtung, welche den Lenkwinkel von der Codescheibe 1 abliest.

In Fig. 4a geht die Schnittebene durch die Zapfen 4 der Codescheibe 1. Es ist zu erkennen, dass zwischen der Lenksäule 15 und den Mittenbohrungen von Ausgleichsstück 5 und Codescheibe 1 ein ausreichender Abstand vorhanden ist, um eine einfache Montage des Lenkwinkelsensors zu ermöglichen und evtl. vorhandene Rundlaufschwankungen der Lenksäule 15 oder radialen Versatz zwischen der Codescheibe 1 und der Lenksäule 15 auszugleichen. Die Langlöcher 6 erlauben das Verschieben der Codescheibe 1 relativ zu dem Ausgleichsstück 5.

In Fig. 4b geht die Schnittebene durch die Stifte 8 des Ausgleichsstücks 5. Es ist zu erkennen, dass die Langlöcher 14 ausreichend lang sind, um einen radialen Versatz der Lenksäule 15 bzw. des Lenkrads 11 relativ zum Ausgleichsstück 5 zu erlauben. Aus dieser Darstellung wird auch deutlich, dass ein axialer Versatz vom erfindungsgemäßen Lenkwinkelsensor in weiten Bereichen ausgeglichen werden kann, da die Stifte 8 länger sind als die Nabe 12 dick ist.

Alle in der Beschreibung, den nachfolgenden Ansprüchen und der zeichnung dargestellten Merkmale können sowohl einzeln als auch in beliebiger Kombination erfindungswesentlich sein.

## Patentansprüche

1. Lenkwinkelsensor mit einer Codescheibe (1), die mit einer Lenksäule (15) drehfest verbunden ist, **dadurch gekennzeichnet, dass** die Codescheibe (1) mittelbar über ein Ausgleichsstück (5) mit der Lenksäule (15) drehfest verbunden ist, dass das Ausgleichsstück (5) gegenüber der Lenksäule (15) entlang eines ersten Radius (9) verschiebbar ist, dass das Ausgleichsstück (5) gegenüber der Codescheibe (1) entlang eines zweiten Radius (10) verschiebbar ist, und dass der erste Radius (9) und der zweite Radius (10) einen Winkel einschließen.

2. Lenkwinkelsensor nach Anspruch 1, **dadurch gekennzeichnet, dass** der erste Radius (9) und der zweite Radius (10) einen Winkel von 90° einschließen.

3. Lenkwinkelsensor nach einem der vorhergehenden Ansprüche, **dadurch gekennzeichnet, dass** an der Codescheibe (1) oder dem Ausgleichsstück (5) mindestens ein in axialer Richtung weisender Vorsprung (4) vorgesehen ist, der in eine sich in Richtung des ersten Radius (9) erstreckende Ausnehmung (6) in dem Ausgleichsstück (5) bzw. der Codescheibe (1) eingreift.

4. Lenkwinkelsensor nach einem der vorhergehenden Ansprüche, **dadurch gekennzeichnet, dass** an der Lenksäule (15) oder dem Ausgleichsstück (5) mindestens ein in axialer Richtung weisender Vorsprung (8) vorgesehen ist, der in eine sich in Richtung des zweiten Radius (10) erstreckende Ausnehmung (14) in des Ausgleichsstücks (5) bzw. der Lenksäule (15) eingreift.

5. Lenkwinkelsensor nach einem der Ansprüche 3 oder 4, **dadurch gekennzeichnet, dass** die Vorsprünge exzentrisch angeordnete, sich in axialer Richtung erstreckende Zapfen (4, 8) sind, und dass die Ausnehmungen sich in Richtung des ersten Radius (9) oder des zweiten Radius (10) erstreckende Langlöcher (6, 14) sind.

6. Lenkwinkelsensor nach einem der vorhergehenden Ansprüche, **dadurch gekennzeichnet, dass** das Ausgleichsstück (5) in axialer Richtung geteilt ist und mit Rastmitteln derart versehen ist, dass die Teile des Ausgleichsstücks (5) an geeigneter Stelle der Lenksäule (15) in radialer Richtung zusammengefügt und miteinander verrastet werden.

7. Lenkwinkelsensor nach einem der vorhergehenden Ansprüche, **dadurch gekennzeichnet, dass** die Codescheibe (1) radial gesichert und drehbar in einem Gehäuse (16) des Lenkwinkelsensors gelagert ist.

8. Lenkwinkelsensor nach einem der vorhergehenden Ansprüche, **dadurch gekennzeichnet, dass** in dem Gehäuse (16) des Lenkwinkelsensors eine Einrichtung zum Abtasten der Codescheibe angeordnet ist.

9. Lenkwinkelsensor nach einem der vorhergehenden Ansprüche, **dadurch gekennzeichnet, dass** die Drehwinkelcodierung auf einer Mantelfläche der Codescheibe (1) angeordnet ist.

10. Lenkwinkelsensor nach einem der vorhergehenden Ansprüche, **dadurch gekennzeichnet, dass** die Drehwinkelcodierung auf einer Stirnfläche (3) der Codescheibe (1) angeordnet ist.

11. Lenkwinkelsensor nach einem der vorhergehenden Ansprüche, **dadurch gekennzeichnet, dass** die Drehung der Lenksäule (15) von einem drehfest mit der Lenksäule (15) verbundenen Lenkrad (12) auf das Ausgleichsstück (5) übertragen wird.

## Claims

1. Steering angle sensor with a code disk (1), non-rotatably connected to a steering column (15), **characterised in that** the code disk (1) is indirectly non-rotatably connected to the steering column (15) via a levelling piece (5), **in that** the levelling piece (5) is displaceable in respect of the steering column (15) along a first radius (9), the levelling piece (5) is displaceable in respect of the code disk (1) along a second radius (10) and **in that** the first radius (9) and the second radius (10) enclose an angle.

2. Steering angle sensor according to claim 1, **characterised in that** the first radius (9) and the second radius (10) enclose an angle of 90°.

3. Steering angle sensor according to one of the preceding claims, **characterised in that** provided on the code disk (1) or the levelling piece (5) is at least one projection (4) pointing in the axial direction, which engages in a recess (6), extending in the direction of the first radius (9), in the levelling piece (5) or the code disk (1).

4. Steering angle sensor according to any one of the preceding claims, **characterised in that** on the steering column (15) or the levelling piece (5) at least one projection (8) pointing in the axial direction is provided, which engages in a recess (14), extending in the direction of the second radius (10), of the levelling piece (5) or the steering column (15).

5. Steering angle sensor according to any one of claims 3 or 4, **characterised in that** the projections are eccentrically arranged pegs (4, 8) extending in the axial direction and **in that** the recesses are elongated holes (6, 14) extending in the direction of the first radius (9) or the second radius (10).

6. Steering angle sensor according to any one of the preceding claims, **characterised in that** the levelling piece (5) is divided in the axial direction and is provided with catching means in such a way that the parts of the levelling piece (5) are joined in the radial direction at a suitable point of the steering column (15) and locked together.

7. Steering angle sensor according to any one of the preceding claims, **characterised in that** the code disk (1) is held so as to be radially secured and rotatable in a housing (16) of the steering angle sensor.

8. Steering angle sensor according to any one of the preceding claims, **characterised in that** a device for scanning the code disk is arranged in the housing (16) of the steering angle sensor.

9. Steering angle sensor according to any one of the preceding claims, **characterised in that** the angle of rotation coding is arranged on an outer face of the code disk (1).

10. Steering angle sensor according to any one of the preceding claims, **characterised in that** the angle of rotation coding is arranged on a front face (3) of the code disk (1).

11. Steering angle sensor according to any one of the preceding claims, **characterised in that** the rotation of the steering column (15) is transmitted onto the levelling piece (5) by a steering wheel (12), non-rotatably connected to the steering column (15).

## Revendications

1. Capteur angulaire orientable avec un disque de code (1) qui est solidaire d'une colonne de direction (15), **caractérisé en ce que** le disque de code (1) est indirectement solidaire de la colonne de direction (15) par le biais d'une pièce de compensation (5), **en ce que** la pièce de compensation (5) peut être décalée par rapport à la colonne de direction (15) le long d'un premier rayon (9), **en ce que** la pièce de compensation (5) peut être décalée par rapport au disque de code (1) le long d'un deuxième rayon (9) et **en ce que** le premier rayon (9) et le deuxième rayon (10) forment un angle.

2. Capteur angulaire orientable selon la revendication 1, **caractérisé en ce que** le premier rayon (9) et le deuxième rayon (10) forment un angle de 90°.

3. Capteur angulaire orientable selon une des revendications précédentes, **caractérisé en ce qu'**il est prévu au niveau du disque de code (1) ou de la pièce de compensation (5) au moins une partie en saillie (4), montrant une direction axiale, qui s'encliquette dans un creux (6) s'étendant en direction du premier rayon (9) dans la pièce de compensation (5) ou dans le disque de code (1).

4. Capteur angulaire orientable selon une des revendications précédentes, **caractérisé** en qu'il est prévu au niveau de la colonne de direction (15) ou de la pièce de compensation (5) au moins une partie en saillie (8), montrant une direction axiale, qui s'encliquette dans un creux (14) s'étendant en direction du deuxième rayon (10) dans la pièce de compensation (5) ou dans la colonne de direction (15).

5. Capteur angulaire orientable selon une des revendications 3 ou 4, **caractérisé en ce que** les parties en saillie sont des tourillons (4, 8) s'étendant dans une direction axiale et placés de manière excentrique et **en ce que** les creux sont des trous oblongs (6, 14) s'étendant en direction du premier rayon (9) ou du deuxième rayon (10).

6. Capteur angulaire orientable selon une des revendications précédentes, **caractérisé en ce que** la pièce de compensation (5) est divisée dans une direction axiale et pourvue de moyens d'encliquetage de manière que les parties de la pièce de compensation (5) soient assemblées en direction axiale et encliquetées ensemble à un endroit approprié de la colonne de direction (15).

7. Capteur angulaire orientable selon une des revendications précédentes, **caractérisé en ce que** le disque de code (1) est immobilisé radialement et est logé tout en pouvant pivoter dans un boîtier (16) du capteur angulaire orientable.

8. Capteur angulaire orientable selon une des revendications précédentes, **caractérisé en ce qu'**un dispositif pour lire le disque de code est placé dans le boîtier (16) du capteur angulaire orientable.

9. Capteur angulaire orientable selon une des revendications précédentes, **caractérisé en ce que** le codage de l'angle de rotation est placé sur une surface latérale du disque de code (1).

10. Capteur angulaire orientable selon une des revendications précédentes, **caractérisé en ce que** le codage de l'angle de rotation est placé sur une surface frontale (3) du disque de code (1).

11. Capteur angulaire orientable selon une des revendications précédentes, **caractérisé en ce que** la rotation de la colonne de direction (15) est transmise à la pièce de compensation (5) par un volant (12) solidaire de la colonne de direction (15).
